# DEMANDE DE BREVET EUROPEEN

(11) **EP 4 682 389 A1**
(43) Date de publication de la demande: **21.01.2026**
(21) Numéro de dépôt: 25186631.5
(22) Date de dépôt: 01.07.2025
(51) Int. Cl.: F16B 5/02, F16B 19/02

(54) **DISPOSITIF DE LIAISON À DOUBLE EXCENTRIQUE POUR LIER UNE PATTE DE FIXATION À UNE CHAPE ET SYSTÈME DE LIAISON COMPRENANT AU MOINS UN TEL DISPOSITIF DE LIAISON**

(30) Priorité: 19.07.2024 FR 2407965
(71) Demandeur: Airbus SAS, 31700 Blagnac Cedex (FR); Airbus Operations SAS, 31060 Toulouse (FR)
(72) Inventeur: MATHEIS, Xavier, 31060 Toulouse (FR); COLMAGRO, David, 31770 Colomiers (FR)
(74) Mandataire: Gevers & Orès

(57) **Abrégé**

- Dispositif de liaison à double excentrique pour lier une patte de fixation à une chape et système de liaison comprenant au moins un tel dispositif de liaison.
- Le dispositif de liaison (1) comporte un manchon principal (10) comprenant un tronçon central (11) inséré dans un orifice (7) de la patte de fixation (5) et deux tronçons d'extrémité (13A, 13B) de part et d'autre du tronçon central (11), les centres des surfaces externes des deux tronçons d'extrémité (13A, 13B) étant décalés par rapport au centre de la surface externe du tronçon central (11), ainsi que deux douilles (16A, 16B), dont chacune est insérée dans un orifice (9A, 9B) traversant de la chape (6) et montée sur l'un des tronçons d'extrémité (13A, 13B), chacune des douilles (16A, 16B) présentant une surface externe dont le centre est décalé par rapport au centre de sa surface interne, le dispositif de liaison (1) comprenant ainsi deux éléments d'excentrique, permettant par des positionnements angulaires appropriés de compenser une erreur d'alignement entre l'orifice (7) traversant la patte de fixation (5) et les orifices (9A, 9B) traversants de la chape (6).

## Description

### Domaine technique

La présente invention concerne un dispositif de liaison d'une patte de fixation à une chape et un système de liaison comprenant au moins un tel dispositif de liaison.

### Etat de la technique

La présente invention s'applique à l'assemblage de parties ou d'éléments de structure d'un aéronef, en particulier d'un avion de transport.

Plus particulièrement, bien que non exclusivement, elle s'applique à l'assemblage d'un tronçon central d'un aéronef monocouloir, et notamment à la liaison d'une poutre ventrale (« keel beam ») au fuselage de l'aéronef. Les différents éléments d'interface entre une poutre ventrale et le fuselage assurent le transfert de charges de compression et de traction, générées par la flexion du fuselage durant le décollage, l'atterrissage et le vol et/ou de charges générées lors du roulement au sol de l'aéronef, qui sont transférées à la poutre ventrale à partir de la structure primaire.

Lors de l'assemblage de deux éléments de structure, une capacité d'ajustement doit être prévu pour corriger des erreurs d'alignement entre les parties à assembler, notamment entre une chape et une patte de fixation coopérantes.

Pour l'assemblage d'une poutre ventrale, une capacité d'ajustement est généralement obtenue en prévoyant une longueur ou une largeur appropriée de parties d'interface au niveau du fuselage pour permettre des contre-perçages pendant l'assemblage. Le procédé d'assemblage mis en œuvre est relativement long et nécessite de nombreuses opérations manuelles telles que notamment un perçage, une séparation, un ébavurage, et un nettoyage, parfois un calage, ainsi qu'un assemblage utilisant de nombreux éléments de fixation. Ce procédé d'assemblage doit être répété pour chaque partie de la poutre ventrale liée au fuselage, à chacune de ses extrémités. De plus, ce procédé est réalisé dans une position non ergonomique.

Il existe donc un besoin de pouvoir disposer d'une solution fiable pour assembler deux pièces, et plus particulièrement une chape et une patte de fixation, permettant de corriger un écart d'alignement et palliant les inconvénients mentionnés précédemment.

### Exposé de l'invention

La présente invention a pour objet de proposer une solution pour répondre au besoin précité. Elle concerne un dispositif de liaison d'une patte de fixation à une chape.

Selon l'invention, ledit dispositif de liaison comporte au moins :
- un manchon principal comprenant un tronçon central destiné à être inséré dans un orifice traversant de la patte de fixation, le tronçon central présentant en section transversale une surface externe circulaire ayant un premier diamètre, le manchon principal comprenant également deux tronçons d'extrémité liés audit tronçon central, respectivement de part et d'autre longitudinalement du tronçon central, les surfaces externes des deux tronçons d'extrémité présentant en section transversale une forme circulaire ayant un même second diamètre, ledit second diamètre étant différent dudit premier diamètre, les centres desdites surfaces externes circulaires des deux tronçons d'extrémité étant décalés par rapport au centre de la surface externe circulaire du tronçon central dans un plan transversal ; et
- deux douilles, dont chacune est montée sur l'un des tronçons d'extrémité avec une surface interne circulaire en contact avec la surface externe circulaire du tronçon d'extrémité correspondant et est destinée à être insérée dans un orifice traversant de la chape, chacune desdits douilles présentant une surface externe circulaire en section transversale dont le centre est décalé par rapport au centre de sa surface interne circulaire.

Ainsi, grâce à l'invention, le dispositif de liaison comprend deux éléments d'excentrique, un premier élément d'excentrique obtenu par le décalage entre les tronçons d'extrémité et le tronçon central du manchon principal et un second élément d'excentrique obtenu par le décalage entre les surfaces internes et externes des douilles. Ces deux éléments d'excentrique permettent, par un positionnement angulaire (en rotation) du manchon principal et donc du tronçon central (dans l'orifice de la patte de fixation) et par un positionnement angulaire (en rotation) des douilles par rapport au manchon, d'adapter le positionnement relatif entre la surface circulaire externe du tronçon central et les surfaces circulaires externes des tronçons d'extrémité, de manière à pouvoir compenser une éventuelle erreur d'alignement entre l'orifice traversant de la patte de fixation et les orifices traversants de la chape.

La patte de fixation peut ainsi être liée de façon simple et rapide, avec un nombre d'actions manuelles limité, à la chape, comme précisé ci-dessous, tout en remédiant à une éventuelle erreur d'alignement.

De façon avantageuse, le tronçon central du manchon principal est pourvu, à l'une de ses extrémités longitudinales, d'un rebord saillant radialement.

Dans un mode de réalisation préféré, le dispositif de liaison comporte un manchon interne qui est logé dans ledit manchon principal, sa surface externe étant en contact avec une surface interne du manchon principal. De plus, de façon avantageuse, le dispositif de liaison comporte, associé à chacune des douilles, au moins un écrou de maintien qui, sous l'action d'un écrou vissé sur un tronçon fileté du manchon interne, exerce une pression sur la douille, pour la bloquer en translation.

En outre, avantageusement, le dispositif de liaison comporte un écrou et une rondelle pour bloquer en translation au moins le manchon principal.

Par ailleurs, de façon avantageuse, au moins l'un des éléments suivants présente une forme tronconique :
- le manchon principal ;
- les douilles ;
- le manchon interne.

La présente invention concerne également un système de liaison d'un premier élément de structure à un second élément de structure.

Selon l'invention, ledit système de liaison comporte au moins une patte de fixation solidaire du premier élément de structure et au moins une chape solidaire du second élément de structure, et la patte de fixation est liée à la chape à l'aide d'un dispositif de liaison tel que décrit ci-dessus, dont le tronçon central du manchon principal est inséré dans un orifice traversant de la patte de fixation et dont chacune des deux douilles est montée dans un orifice traversant de la chape, le positionnement angulaire du manchon principal et les positionnements angulaires des douilles par rapport au manchon principal étant adaptés pour compenser un éventuel défaut d'alignement entre l'axe de l'orifice traversant de la patte de fixation et les axes des orifices traversants de la chape.

Dans un mode de réalisation particulier, le premier élément de structure correspond à une partie de fuselage et le second élément de structure correspond à une poutre ventrale d'un aéronef, le système de liaison comporte une pluralité de pattes de fixation solidaires de la partie de fuselage et une pluralité de chapes solidaires d'une extrémité de la poutre ventrale, et chacune desdites pattes de fixation est liée à l'une desdites chapes à l'aide d'un dispositif de liaison tel que décrit ci-dessus.

La présente invention concerne, en outre, un procédé de mise en place d'un système de liaison tel que précité.

Selon l'invention, ledit procédé comporte au moins les étapes suivantes :
- une étape de mise en place du manchon principal dans les orifices de la patte de fixation et de la chape, le manchon principal étant positionné angulairement à une première position ;
- une étape de mise en place des douilles, chacune des douilles étant positionnée angulairement à une seconde position, la première position et les secondes positions étant adaptées pour compenser un éventuel défaut d'alignement entre l'axe de l'orifice traversant de la patte de fixation et les axes des orifices traversants de la chape ; et
- une étape de mise en place d'éléments de serrage et de maintien.

Avantageusement, ledit procédé comporte également une étape de mise en place du manchon interne dans le manchon principal.

### Brève description des figures

Les figures annexées feront bien comprendre comment l'invention peut être réalisée. Sur ces figures, des références identiques désignent des éléments semblables.
La figure 1 est une vue schématique, partielle et en perspective d'une liaison d'une extrémité d'une poutre ventrale à une partie de fuselage d'un aéronef, à l'aide notamment de quatre dispositifs de liaison.
La figure 2 est une coupe longitudinale d'un mode de réalisation particulier d'un dispositif de liaison liant une patte de fixation représentée partiellement à une chape également représentée partiellement.
La figure 3 est une vue schématique en section transversale, montrant un manchon principal formant un premier élément d'excentrique.
La figure 4 est une vue schématique en section transversale, montrant une douille formant un second élément d'excentrique.
La figure 5 est une vue agrandie d'une partie de la figure 2, montrant un rebord saillant et le positionnement de différents éléments du dispositif de liaison.
La figure 6 est une vue agrandie d'une partie de la figure 2, montrant le positionnement de différents éléments du dispositif de liaison.
La figure 7 est le schéma synoptique d'un procédé de mise en place d'un système de liaison.

### Description détaillée

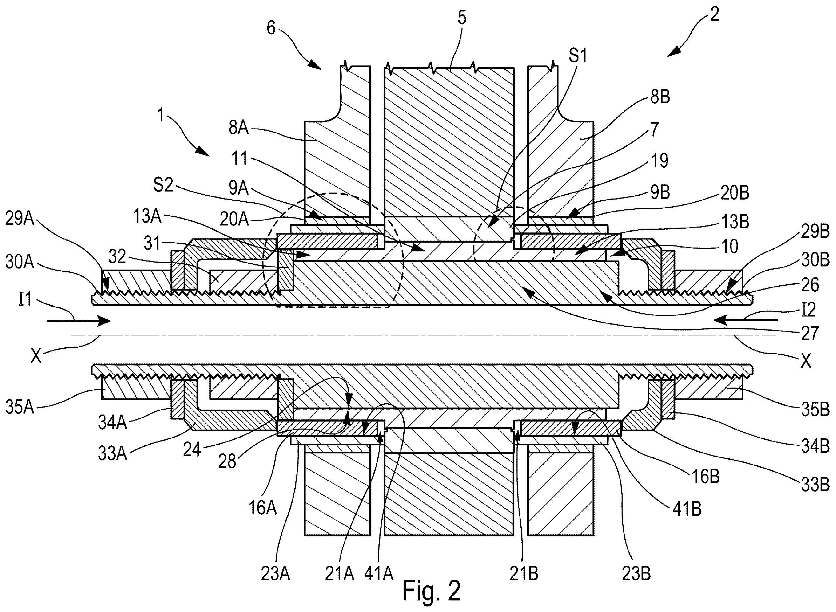

Le dispositif de liaison (ci-après « dispositif 1 ») permettant d'illustrer l'invention et représenté, de façon schématique, dans un mode de réalisation particulier sur la figure 2, fait partie d'un système de liaison (ci-après « système 2 »).

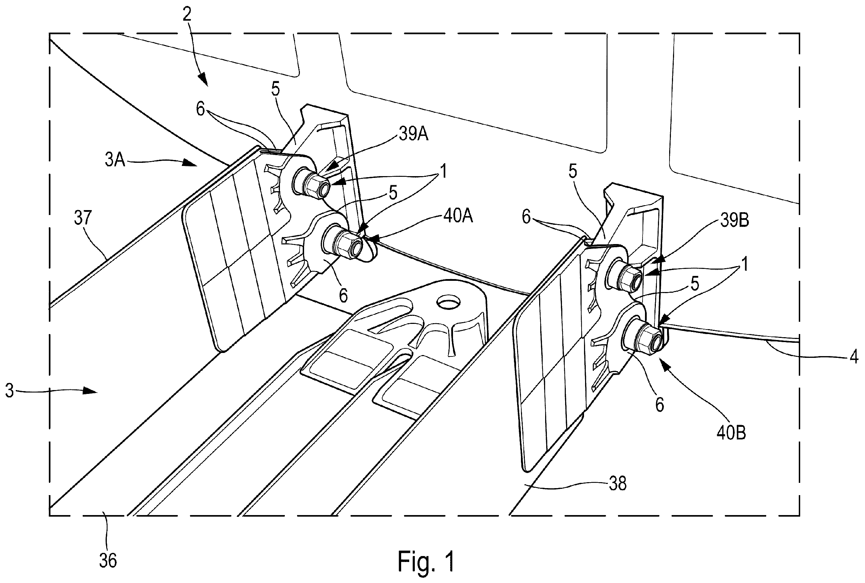

Le système 2 est destiné à lier ensemble deux éléments de structure d'un aéronef, en particulier d'un avion de transport. Dans un exemple préféré, tel que représenté sur la figure 1, le système 2 est destiné à lier une extrémité 3A d'une poutre ventrale 3 à une partie de fuselage 4 de l'aéronef. Dans cet exemple de réalisation, le système 2 comporte quatre dispositifs 1, comme précisé ci-dessous.

Chaque dispositif 1 du système 2 est destiné à lier une patte de fixation 5 à une chape 6. Dans l'exemple de la figure 1, chaque patte de fixation 5 est solidaire de la partie de fuselage 4 et chaque chape 6 est solidaire de l'extrémité 3A de la poutre ventrale 3.

La patte de fixation 5 est pourvue d'un orifice 7 circulaire traversant (figure 2). Quant à la chape 6, elle présente, de façon usuelle, une forme générale en U avec deux branches 8A et 8B représentées partiellement sur la figure 2, dont chacune est pourvue d'un orifice 9A, 9B circulaire traversant.

Dans la description suivante, les éléments identiques (du dispositif 1) associés aux deux branches 8A et 8B sont identifiés par une même référence numérique, à laquelle est ajoutée une lettre A ou B, à savoir la lettre A lorsque cet élément est associé à la branche 8A et la lettre B lorsque cet élément est associé à la branche 8B.

Le dispositif 1 est adapté à être inséré dans les orifices 7, 9A et 9B et à compenser un éventuel décalage d'alignement de l'orifice 7 par rapport aux orifices 9A et 9B, c'est à dire un décalage dans un plan transversal (précisé ci-dessous) entre les centres des cercles des orifices 7, 9A et 9B circulaires.

Pour ce faire, le dispositif 1 comporte un manchon principal 10, réalisé en une seule pièce, qui comprend un tronçon central 11 d'axe longitudinal X-X. Ce tronçon central 11 est destiné à être inséré dans l'orifice 7 traversant de la patte de fixation 5.

Dans le cadre de la présente invention :
- l'adjectif « longitudinal » fait référence à la direction de l'axe X-X (figure 2) qui correspond également à celui de l'orifice 7 ;
- les adjectifs « interne » et « externe » sont définis par rapport à des directions radiales par rapport à cet axe X-X, à savoir pour « interne » en s'approchant de l'axe X-X et pour « externe » en s'éloignant de l'axe X-X ; et
- l'adjectif « transversal » fait référence à un plan orthogonal à l'axe X-X.

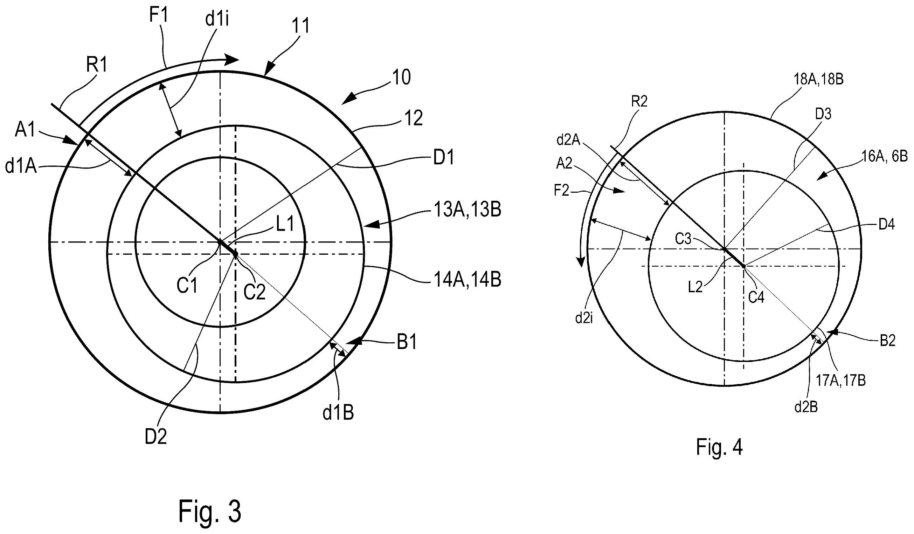

Le tronçon central 11 du manchon principal 10 présente, en section transversale, une surface externe 12 circulaire de centre C1 et de diamètre D1, comme représenté sur la figure 3.

Le manchon principal 10 comprend également, comme représenté sur la figure 2, deux tronçons d'extrémité 13A et 13B qui sont prévus respectivement de part et d'autre longitudinalement dudit tronçon central 11.

Les surfaces externes 14A et 14B des deux tronçons d'extrémité 13A et 13B présentent, en section transversale, une même forme circulaire de centre C2 et de diamètre D2, comme représenté sur la figure 3. De plus, ce diamètre D2 est inférieur au diamètre D1.

Les centres C2 des surfaces externes 14A et 14B circulaires des deux tronçons d'extrémité 13A et 13B sont décalés d'une distance par rapport au centre C1 de la surface externe 12 circulaire du tronçon central 11 dans un plan transversal, comme représenté sur la figure 3. Ce décalage (de distance L1) permet de réaliser un premier élément d'excentrique, comme précisé ci-dessous.

Le dispositif 1 comporte, de plus, deux douilles 16A et 16B représentées sur la figure 2. Chacune de ces douilles 16A et 16B est destinée à être insérée dans l'un des orifices 9A et 9B traversants de la chape 6.

Chacune de ces douilles 16A et 16B est montée sur l'un des tronçons d'extrémité 13A et 13B. Ainsi, la douille 16A est montée sur le tronçon d'extrémité 13A de sorte que sa surface interne 17A circulaire (figure 4) est en contact avec la surface externe 14A circulaire (figure 3) du tronçon d'extrémité 13A. De même, la douille 16B est montée sur le tronçon d'extrémité 13B de sorte que sa surface interne 17B circulaire (figure 4) est en contact avec la surface externe 14B circulaire (figure 3) du tronçon d'extrémité 13B.

De plus, chacune des douilles 16A et 16B présente une surface externe 18A, 18B, circulaire en section transversale, de centre C3 et de diamètre D3, et la surface interne 17A, 17B, également circulaire en section transversale, comprend un centre C4 et un diamètre D4, comme représenté sur la figure 4.

Pour chacune des douilles 16A et 16B, le centre C3 de la surface externe 18A, 18B circulaire est décalé d'une distance L2 par rapport au centre C4 de la surface interne 17A, 17B circulaire dans le plan transversal, comme représenté sur la figure 4. Ce décalage (distance L2) permet de réaliser un second élément d'excentrique.

Ainsi, le dispositif 1 comprend donc deux éléments d'excentrique, un premier élément d'excentrique obtenu par le décalage entre les tronçons d'extrémité 13A et 13B et le tronçon central 11 du manchon principal 10 et un second élément d'excentrique obtenu par le décalage entre les surfaces internes 17A et 17B et les surfaces externes 18A et 18B des douilles 16A et 16B. Les effets des deux éléments d'excentrique sont combinés, comme précisé ci-dessous.

La distance d1i entre la surface externe 12 du tronçon central 11 et la surface externe 13A, 13B de chacune des douilles 16A, 16B, dans le plan transversal, varie en fonction de sa position angulaire, c'est-à-dire de sa position le long de la surface externe 12 (curviligne en section transversale). Sur la figure 3, on a représenté un segment de référence R1 passant par les centres C1 et C2. D'un côté A1 le long du segment de référence R1, la distance d1A entre la surface externe 12 et la surface externe 13A, 13B est la plus longue, et de l'autre côté B1, le long du segment de référence R1, la distance d1B entre la surface externe 12 et la surface externe 13A, 13B est la plus courte. Entre ces deux positions angulaires, en tournant dans le sens illustré par une flèche F1 (ou dans le sens opposé à cette flèche F1), la distance d1i diminue de la distance d1A à la distance d1B.

La distance d2i entre la surface externe 18A, 18B et la surface interne 17A, 17B de chaque douille 16A, 16B, dans le plan transversal, varie en fonction de position angulaire, c'est-à-dire de sa position le long de la surface externe 18A, 18B (curviligne en section transversale). Sur la figure 4, on a représenté un segment de référence R2 passant par les centres C3 et C4. D'un côté A2 le long du segment de référence R2, la distance d2A entre la surface externe 18A, 18B et la surface interne 17A, 17B est la plus longue, et de l'autre côté B2, le long du segment de référence R2, la distance d2B entre la surface externe 18A, 18B et la surface externe 17A, 17B est la plus courte. Entre ces deux positions angulaires, en tournant dans le sens illustré par une flèche F2 (ou dans le sens opposé à cette flèche F2), la distance d2i diminue de la distance d2A à la distance d2B.

Ces deux éléments d'excentrique permettent, par un positionnement angulaire approprié du manchon principal 10 et donc du tronçon central 11 dans l'orifice 7 de la patte de fixation 5, obtenu en tournant le manchon principal 10, et par un positionnement angulaire des douilles 16A et 16B par rapport au manchon principal 10, obtenu en tournant les douilles 16A et 16B par rapport au manchon principal 10, ces deux positionnements angulaires étant adaptés l'un à l'autre et coopérants, de régler le positionnement relatif entre la surface externe 12 circulaire du tronçon central 11 et les surfaces externes 18A et 18B circulaires des douilles 16A et 16B, de manière à pouvoir compenser une erreur d'alignement entre l'orifice 7 traversant de la patte de fixation 5 et les orifices 9A et 9B traversants de la chape 6.

A titre d'illustration non limitative, le décalage L1 entre les centres C1 et C2 est compris entre 0,5 et 3 mm et est de préférence de l'ordre de 1,5 mm, et le décalage L2 entre les centres C3 et C4 est compris entre 0,5 et 3 mm et est de préférence de l'ordre de 1,5 mm, ce qui permet au dispositif 1 de compenser un décalage (entre les centres des cercles des orifices 7, 9A et 9B circulaires) compris entre 1 et 6 mm et de préférence jusqu'à 3 mm.

Comme représenté sur la figure 2, l'orifice 7 de la patte de fixation 5 est pourvu d'une bague 19 qui est montée avec un ajustement par serrage, précisé ci-dessous. Cette bague 19 a sensiblement la même longueur (à savoir la dimension selon l'axe X-X) que l'orifice 7.

De plus, l'orifice 9A de la branche 8A de la chape 6 est pourvue d'une bague 20A qui est montée avec un ajustement par serrage. Cette bague 20A a sensiblement la même longueur (à savoir la dimension selon l'axe X-X) que l'orifice 9A. De même, l'orifice 9B de la branche 8B de la chape 6 est également pourvu d'une bague 20B qui est montée avec un ajustement par serrage. Cette bague 20B a également sensiblement la même longueur que l'orifice 9B.

De plus, l'orifice 7 de la patte de fixation 5 est pourvue d'une bague 19 qui est montée avec un ajustement par serrage.

Par ailleurs, un espace libre 21A, avec une longueur par exemple de l'ordre de 1,5 mn, est prévu entre la douille 16A et la bague 19, ce qui permet d'éviter que ces deux éléments viennent en contact l'un avec l'autre. De même, un espace libre 21B, avec une longueur par exemple de l'ordre de 1,5 mn, est prévu entre la douille 16B et la bague 19, ce qui permet d'éviter également que ces deux éléments viennent en contact l'un avec l'autre.

Le manchon principal 10 a une surface interne 24 délimitant un évidement interne qui présente une forme légèrement tronconique, avec un angle réduit (par rapport à l'axe X-X) compris, à titre d'illustration, entre 0.5 mm et 5 mm et par exemple de l'ordre de 1 mm. Le diamètre de la forme tronconique augmente dans le sens illustré par une flèche I1 sur la figure 2, à savoir de la branche 8A vers la branche 8B.

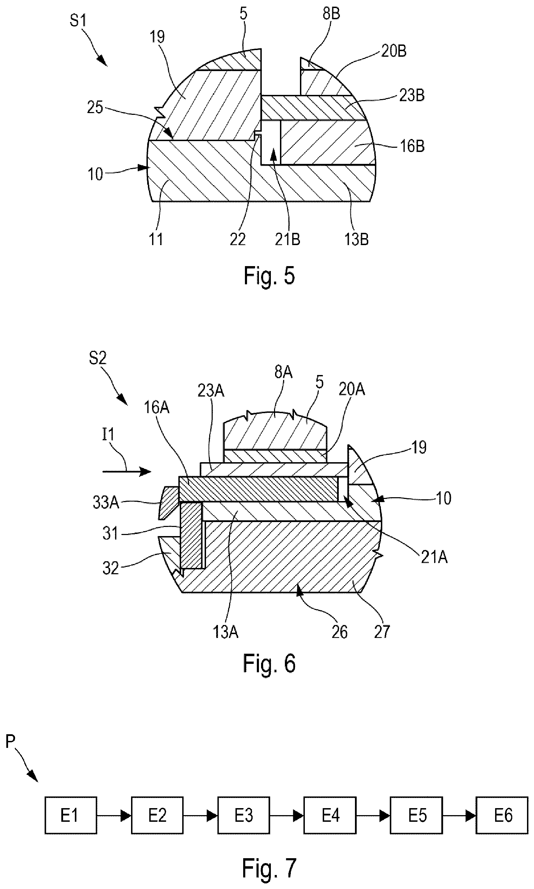

De plus, le tronçon central 11 du manchon principal 10 est pourvu, à l'une de ses deux extrémités longitudinales, d'un rebord 22 qui est saillant radialement vers l'extérieur, comme représenté de façon agrandie sur la figure 5. La figure 5 illustre une partie S1 agrandie de la figure 2.

Ce rebord 22 saillant délimite un logement 25 (figure 5). Ce logement 25 permet de bloquer longitudinalement le tronçon central 11 par rapport à la bague 19.

De plus, le dispositif 1 comporte des douilles 23A et 23B. Chaque douille 23A, 23B est agencée entre la bague 20A, 20B et la douille 16A, 16B. La surface interne 41A, 41B de chaque douille 23A, 23B présente une forme légèrement tronconique, avec un angle réduit (par rapport à l'axe X-X) compris, à titre d'illustration, entre 0.5 mm et 5 mm et par exemple de l'ordre de 1 mm. Les douilles 23A et 23B sont montées avec un ajustement par jeu. De plus, elles sont insérées comme précisé ci-dessous, jusqu'à être en contact avec la bague 19, comme bien visible sur la figure 5 pour la douille 23B.

Chacune des douilles 16A et 16B dont la surface externe 18A, 18B présente une forme légèrement tronconique, avec un angle réduit (par rapport à l'axe X-X) compris, à titre d'illustration, entre 0.5 mm et 5 mm et par exemple de l'ordre de 1 mm, est montée entre le tronçon d'extrémité 13A, 13B et la douille 23A, 23B. Le diamètre de la forme tronconique de la douille 16A augmente dans le sens illustré par une flèche I2 sur la figure 2, de la branche 8B vers la branche 8A, et le diamètre de la forme tronconique de la douille 16B augmente dans le sens illustré par la flèche I1.

Dans un mode de réalisation préféré, le dispositif 1 comporte également un manchon interne 26, réalisé en une seule pièce, qui est logé dans le manchon principal 10.

Le manchon interne 26 comprend :
- un tronçon central 27 pourvu d'une surface externe 28 légèrement tronconique, avec un angle réduit (par rapport à l'axe X-X) compris, à titre d'illustration, entre 0.5 mm et 5 mm et par exemple de l'ordre de 1 mm ; et
- deux tronçons d'extrémité 29A et 29B, qui sont situés respectivement de part et d'autre longitudinalement dudit tronçon central 27. Chaque tronçon d'extrémité 29A, 29B est pourvu d'une surface externe 30A, 30B filetée.

La surface externe 28 du tronçon central 27 du manchon interne 26 est au contact de la surface interne 24 du manchon principal 10. Le manchon interne 26 est poussé longitudinalement dans le manchon principal 10, comme précisé ci-dessous.

Le dispositif 1 comporte, en outre, comme représenté sur la figure 6 (qui illustre une partie S2 agrandie de la figure 2), une rondelle 31 en contact d'une part avec le tronçon d'extrémité 13A du manchon principal 10 et d'autre part avec un écrou 32.

L'écrou 32 est vissé sur le tronçon fileté 30A du manchon interne 26 de sorte qu'il se déplace dans le sens illustré par la flèche I1 sur les figures 2 et 6. La rondelle 31 maintenue par l'écrou 32 permet de bloquer en translation le manchon principal 10 dans le sens de la flèche I2.

Les deux douilles 16A et 16B sont assemblées en étant bloquées radialement contre les douilles 23A et 23B. Il subsiste alors encore une possibilité de translation (selon l'axe X-X) entre ces éléments. Pour bloquer cette translation, le dispositif 1 comporte un écrou de maintien (et de serrage) 33A, 33B destiné à exercer une pression sur la douille 16A, 16B, comme représenté sur la figure 2.

Pour ce faire, cet écrou de maintien 33A, 33B est déplacé par un écrou 35A, 35B usuel, par exemple de type hexagonal, une rondelle 34A, 34B étant agencée entre l'écrou de maintien 33A, 33B et l'écrou de maintien 35A, 35B.

L'écrou 35A est vissé sur le tronçon fileté 30A du manchon interne 26 de sorte qu'il se déplace dans le sens illustré par la flèche I1 sur la figure 2, ce qui déplace l'écrou de maintien 33A dans le même sens et donc également la douille 16A. Cette translation combinée à une forme légèrement conique de la douille 16A va élargir la douille 16A, ce qui va bloquer les douilles 16A et 23A.

De même, l'écrou 35B est vissé sur le tronçon fileté 30B du manchon interne 26 de sorte qu'il se déplace dans le sens illustré par la flèche I2 sur la figure 2, ce qui déplace l'écrou de maintien 33B dans le même sens et donc également la douille 16B. Cette translation combinée à une forme légèrement conique de la douille 16B va élargir la douille 16B, ce qui va bloquer les douilles 16B et 23B.

Le dispositif 1, tel que décrit ci-dessus, et le système 2 comprenant ce dispositif 1 sont mis en place à l'aide d'un procédé P représenté sur la figure 7.

Concernant ce procédé P, lorsque les deux éléments de structure à assembler, tels que la poutre ventrale 3 et la partie de fuselage 4 de l'exemple de la figure 1, sont en place, avec la mise en place également à chaque point de liaison des éléments de fixation que sont la chape 6 et la plaque de fixation 5 coopérantes, une étape E1 de mesure est, tout d'abord, mise en œuvre. Cette étape E1 de mesure du procédé P a pour objet de mesurer le décalage éventuel entre le centre de l'orifice 7 de la patte de fixation 5 et les centres des orifices 9A et 9B des branches 8A et 8B de la chape 6.

Puis, une étape E2 de mise en place des douilles 23A et 23B est mise en œuvre, au cours de laquelle les douilles 23A et 23B sont positionnées dans les bagues 20A et 20B des branches 8A et 8B de la chape 6.

Ensuite, à une étape E3 de mise en place, le manchon principal 10 est inséré dans les orifices 7, 9A et 9B de la patte de fixation 5 et de la chape 6 à partir de la branche 8B de la chape 6, dans le sens de la flèche I2 sur la figure 2.

Le manchon principal 10 est positionné à la position angulaire appropriée, en tenant compte du décalage mesuré entre les centres des orifices 7, 9A et 9B.

Le manchon principal 10 est inséré jusqu'à venir au contact du rebord (ou épaulement) 22. La rondelle 31 peut alors être mise en place du côté de la branche 8A en contact avec le tronçon d'extrémité 13A du manchon principal 10.

Puis, à une étape E4 suivante de mise en place, le manchon interne 26 est inséré dans le manchon principal 10 à partir de la branche 8B de la chape 6, dans le sens de la flèche I2 sur la figure 2 et simultanément l'écrou 32 est positionné contre la rondelle 31 de sorte à pouvoir accueillir le tronçon fileté 30A du manchon interne 26.

Le manchon interne 26 qui présente une forme légèrement tronconique, avec un angle réduit compris, à titre d'illustration, entre 0.5 mm et 5 mm et par exemple de l'ordre de 1 mm, élargit le manchon principal 10 et ainsi bloque ce dernier dans toutes les directions.

A une étape E5 suivante de mise en place, les douilles 16A et 16B sont montées dans les branches 8A et 8B de la chape 6. Au cours de cette étape E5, les douilles 16A et 16B sont positionnées dans les bagues 23A et 23B à la position angulaire appropriée, en tenant compte du décalage mesuré entre les centres des orifices 7, 9A et 9B.

Le positionnement angulaire du manchon principal 10 (et donc du tronçon central 11 dans l'orifice 7 de la patte de fixation 5) et le positionnement angulaire des douilles 16A et 16B par rapport au manchon principal 10, sont choisis pour obtenir un positionnement relatif entre la surface externe 12 circulaire du tronçon central 11 et les surfaces externes 18A et 18B circulaires des douilles 16A et 16B, de manière à pouvoir compenser une erreur d'alignement entre l'orifice 7 traversant de la patte de fixation 5 et les orifices 9A et 9B traversants de la chape 6.

Finalement, les derniers éléments sont montés à une étape E6 de mise en place du procédé P pour réaliser un serrage et un maintien. Plus précisément, à cette étape E6, l'écrou de maintien 33A, la rondelle 34A et l'écrou 35A sont mis en place du côté de la branche 8A. L'écrou 35A est vissé sur le tronçon fileté 30A du manchon interne 26 de sorte qu'il se déplace dans le sens illustré par la flèche I1 sur la figure 2, ce qui déplace la rondelle 34A et l'écrou de maintien 33A dans le même sens et va bloquer la douille 16A.

De plus, à cette étape E6, l'écrou de maintien 33B, la rondelle 34B et l'écrou 35B sont mis en place du côté de la branche 8B. L'écrou 35B est vissé sur le tronçon fileté 30B du manchon interne 26 de sorte qu'il se déplace dans le sens illustré par la flèche I2 sur la figure 2, ce qui déplace la rondelle 34B et l'écrou de maintien 33B dans le même sens et va bloquer la douille 16B.

Grâce au dispositif 1 et au procédé P, tels que décrits ci-dessus, la patte de fixation 5 peut être liée de façon simple et rapide, avec un nombre d'actions manuelles limité, à la chape 6, tout en compensant un éventuel décalage d'alignement de l'orifice 7 par rapport aux orifices 9A et 9B, c'est à dire un décalage dans un plan transversal entre les centres des cercles des orifices 7, 9A et 9B.

Le dispositif 1, tel que décrit ci-dessus, fait partie d'un système 2 de fixation d'un premier élément de structure à un second élément de structure.

Dans l'application préférée, représentée sur la figure 1, le système 2 est utilisé pour fixer l'extrémité 3A de la poutre ventrale 3 à la partie de fuselage 4 de l'aéronef. De façon usuelle, la poutre ventrale 3 comprend un corps en U avec une base 36 plane allongée et deux parois latérales 37 et 38 agencés sensiblement orthogonalement à la base 36, de part et d'autre de cette dernière. Le système 2 comporte une pluralité de pattes de fixation 5 solidaires de la partie de fuselage 4 et une pluralité de chapes 6 solidaires de l'extrémité 3A de la poutre ventrale 3.

Chacune de ces pattes de fixation 5 est liée à l'une des chapes 6 à l'aide d'un dispositif de liaison, tel que le dispositif 1 décrit ci-dessus.

Dans un mode de réalisation préféré, représenté sur la figure 1, un couple de chapes 6 est fixé à chacune des parois latérales 37 et 38 de la poutre ventrale 3, à l'extrémité 3A.

Pour chaque couple, l'une des chapes 6, est agencée plus près de la base 36 que l'autre chape 6. Ainsi, sur la paroi latérale 37, la chape 6 agencée à une position 40A sur la figure 1 est située plus près de la base 36 que la chape 6 agencée à une position 39A. De même, sur la paroi latérale 38, la chape 6 agencée à une position 40B est située plus près de la base 36 que la chape 6 agencée à une position 39B.

Comme les charges appliquées sur les chapes 6 agencées aux positions 40A et 40B près de la base 36 sont plus élevées que les charges appliquées sur les chapes 6 agencées aux positions 39A et 39B plus éloignées, il est envisageable de prévoir, pour chacune des chapes 6 agencées aux positions 39A et 39B, des orifices 9A et 9B de diamètre plus faible (et également un dispositif 1 dont les éléments constitutifs et notamment les manchons principaux 10 et les douilles 16A et 16B présentent aussi des diamètres plus faibles) que ceux des chapes 6 agencées aux positions 40A et 40B.

## Revendications

1. Dispositif de liaison d'une patte de fixation à une chape,
**caractérisé en ce qu'**il comporte au moins :
- un manchon principal (10) comprenant un tronçon central (11) destiné à être inséré dans un orifice (7) traversant de la patte de fixation (5), le tronçon central (11) présentant en section transversale une surface externe (12) circulaire ayant un premier diamètre (D1), le manchon principal (10) comprenant également deux tronçons d'extrémité (13A, 13B) liés audit tronçon central (11), respectivement de part et d'autre longitudinalement du tronçon central (11), les surfaces externes (14A, 14B) des deux tronçons d'extrémité (13A, 13B) présentant en section transversale une forme circulaire ayant un même second diamètre (D2), ledit second diamètre (D2) étant différent dudit premier diamètre (D1), les centres (C2) desdites surfaces externes (14A, 14B) circulaires des deux tronçons d'extrémité (13A, 13B) étant décalés par rapport au centre (C1) de la surface externe (12) circulaire du tronçon central (11) dans un plan transversal ; et
- deux douilles (16A, 16B), dont chacune est montée sur l'un des tronçons d'extrémité (13A, 13B) avec une surface interne (17A, 17B) circulaire en contact avec la surface externe (14A, 14B) circulaire du tronçon d'extrémité (13A, 13B) correspondant et est destinée à être insérée dans un orifice (9A, 9B) traversant de la chape (6), chacune desdits douilles (16A, 16B) présentant une surface externe (18A, 18B) circulaire en section transversale dont le centre (C3) est décalé par rapport au centre (C4) de sa surface interne (17A, 17B) circulaire.

2. Dispositif selon la revendication 1,
**caractérisé en ce que** le tronçon central (11) du manchon principal (10) est pourvu, à l'une de ses extrémités longitudinales, d'un rebord (22) saillant radialement.

3. Dispositif selon l'une quelconque des revendications précédentes, **caractérisé en ce qu'**il comporte un manchon interne (26) qui est logé dans ledit manchon principal (10), sa surface externe (28) étant en contact avec une surface interne (24) du manchon principal (10).

4. Dispositif selon la revendication 3,
**caractérisé en ce qu'**il comporte, associé à chacune des douilles (16A, 16B), au moins un écrou de maintien (33A, 33B) qui, sous l'action d'un écrou (35A, 35B) vissé sur un tronçon fileté (30A, 30B) du manchon interne (26), exerce une pression sur la douille (16A, 16B), pour la bloquer en translation.

5. Dispositif selon l'une quelconque des revendications précédentes, **caractérisé en ce qu'**il comporte un écrou (32) et une rondelle (31) pour bloquer en translation au moins le manchon principal (10).

6. Dispositif selon l'une quelconque des revendications précédentes, **caractérisé en ce qu'**au moins l'un des éléments suivants présente une forme tronconique :
- le manchon principal (10) ;
- les douilles (16A, 16B) ;
- le manchon interne (26).

7. Système de liaison d'un premier élément de structure à un second élément de structure,
**caractérisé en ce qu'**il comporte au moins une patte de fixation (5) solidaire du premier élément de structure (4) et au moins une chape (6) solidaire du second élément de structure (3), et **en ce que** la patte de fixation (5) est liée à la chape (6) à l'aide d'un dispositif de liaison (1) selon l'une quelconque des revendications 1 à 6, dont le tronçon central (11) du manchon principal (10) est inséré dans un orifice (7) traversant de la patte de fixation (5) et dont chacune des deux douilles (16A, 16B) est montée dans un orifice (9A, 9B) traversant de la chape (6), le positionnement angulaire du manchon principal (10) et les positionnements angulaires des douilles (16A, 16B) par rapport au manchon principal (10) étant adaptés pour compenser un éventuel défaut d'alignement entre l'axe de l'orifice (7) traversant de la patte de fixation (5) et les axes des orifices (9A, 9B) traversants de la chape (6).

8. Système de liaison selon la revendication 7,
**caractérisé en ce que** le premier élément de structure correspond à une partie de fuselage (4) et le second élément de structure correspond à une poutre ventrale (3) d'un aéronef, **en ce que** le système de liaison (2) comporte une pluralité de pattes de fixation (5) solidaires de la partie de fuselage (4) et une pluralité de chapes (6) solidaires d'une extrémité (3A) de la poutre ventrale (3), et **en ce que** chacune desdites pattes de fixation (5) est liée à l'une desdites chapes (6) à l'aide d'un dispositif de liaison (1) selon l'une quelconque des revendications 1 à 6.

9. Procédé de mise en place d'un système de liaison selon l'une des revendications 7 et 8,
**caractérisé en ce qu'**il comporte au moins les étapes suivantes :
- une étape (E3) de mise en place du manchon principal (10) dans les orifices (7, 9A, 9B) de la patte de fixation (5) et de la chape (6), le manchon principal (10) étant positionné angulairement à une première position ;
- une étape (E5) de mise en place des douilles (16A, 16B), chacune des douilles (16A, 16B) étant positionnée angulairement à une seconde position, la première position et les secondes positions étant adaptées pour compenser un éventuel défaut d'alignement entre l'axe de l'orifice (7) traversant de la patte de fixation (5) et les axes des orifices (9A, 9B) traversants de la chape (6) ; et
- une étape (E6) de mise en place d'éléments (33A, 33B, 34A, 34B, 35A, 35B) de serrage et de maintien.

10. Procédé selon la revendication 9,
**caractérisé en ce qu'**il comporte une étape (E4) de mise en place du manchon interne (26) dans le manchon principal (10).
